# EUROPEAN PATENT APPLICATION

(11) **EP 3 569 057 A1**
(43) Date of publication of application: **20.11.2019**
(21) Application number: 19173713.9
(22) Date of filing: 10.05.2019
(51) Int. Cl.: A01G 3/08, A01G 17/02, A01G 17/00

(54) **THINNER DEVICE AND RELATED AGRICULTURAL MACHINE**

(30) Priority: 14.05.2018 IT 201800005351
(71) Applicant: B.M.V. Di Borio Valerio & C. S.N.C., 12051 Alba (CN) (IT)
(72) Inventor: BORIO, Stefano, 12051 Alba (CN) (IT)
(74) Representative: Boario, Enrico

(57) **Abstract**

Thinner device (3) for thinning out vegetative elements protruding from branches of vegetable plants, in particular fruit trees. The thinner device (3) comprising: a body (4), extending substantially along a longitudinal axis (X), comprising an external structure (41); and a plurality of remover elements (5), adapted to act upon vegetative elements for thinning them out; said remover elements (5) projecting from said body (4) at least along a direction perpendicular to said longitudinal axis (X).

The thinner device (3) comprising a drive system (6), which in turn comprises: at least one first mechanism (65) at least adapted to cause at least said body (4) and said remover elements (5) to rotate in a controlled manner relative to said longitudinal axis (X); at least one second mechanism (7) adapted to move said remover elements (5) relative to said external structure (41) of the body (4).

## Description

The present invention relates to a thinner device adapted to thin out vegetative elements protruding from branches of vegetable plants, in particular trees, e.g. fruit trees. Said protruding vegetative elements are buds, flowers and/or fruits.

The device according to the present invention is therefore used for thinning out protruding vegetative elements on plant branches, reducing their total number while keeping an adequate number thereof for their subsequent evolution into flowers and fruits and/or their future complete ripening.

It is known that selective thinning out of flowers and/or fruits, not yet fully ripe, allows improving the ripening and quality of those fruits, which have not been thinned out, since a higher-quality fruit can be obtained at the cost of lower productivity in terms of number and/or weight.

It is known by the patent application US20130326942 a device for removing flowers from a fruit tree by removing said flowers from branches of the tree. The device comprises a rod whereon an idle roller is mounted. Said roller comprises fibres in the form of bristles. The motion of the rod along an axis causes the roller to rotate, resulting in the bristles hitting the flowers and thinning them out.

Such a solution suffers from the drawback that the proper operation of the device is dependent on the motion of the rod, and hence on the operator who is controlling said rod. Therefore, the solution described and illustrated in such document appears to be difficult to implement on an agricultural machine, in particular because it may be subject to several technical problems; for example, for the device to work correctly, it is required that the vehicle moves at a constant and relatively high speed, independently of the conditions of the ground whereon the agricultural machine is moving.

The solution described in the above-mentioned patent also suffers from a non-negligible transient period before it starts operating appropriately. Moreover, when working on rows of trees, it cannot ensure a homogeneous action upon all trees in the row because of such transient periods, particularly at the beginning and at the end of each row.

Furthermore, the solution described in this prior-art document is strictly dependent on the density and flexibility of the bristles included in the machine. Therefore, the bristles will have to be appropriately selected as a function of the type of plant and/or protuberance to be thinned out.

It must also be pointed out that machines suitable for reaping or picking fruits are designed to exert an invasive action on the vegetable plant in order to completely remove all fruits from the vegetable plant; therefore, such technology would be hardly applicable for executing a thinning operation on vegetative elements, particularly as regards buds and flowers.

The present invention aims at solving the problems encountered in the prior art by proposing an innovative solution that can be applied to different types of plants and different types of vegetative elements to be thinned out.

The solution according to the present invention combines different movements of remover elements, so that the thinning action exerted on vegetative elements can be controlled in a more accurate and uniform manner.

One aspect of the present invention relates to a thinner device having the features set out in the appended claim 1.

A further aspect of the present invention relates to an agricultural machine having the features set out in the appended claim 15.

The features and advantages of the device and machine will become clear and apparent from the following description of several possible exemplary, but non-limiting, embodiments thereof and from the following figures, wherein:
- Figure 1 shows an axonometric view of one possible embodiment of at least a portion of an agricultural machine comprising the thinner device according to the present invention;
- Figure 2 shows a top view of the agricultural machine with the thinner device of Figure 1;
- Figure 3 shows a sectional view relative to a vertical plane A-A of the agricultural machine with the thinner device of Figure 2;
- Figure 4 shows a sectional view of the agricultural machine comprising the thinner device, wherein the thinner device is rotated compared to the device shown in Figure 3, so as to show the sections of the remover elements;
- Figure 5 shows a sectional view of one possible embodiment of the thinner device alone;

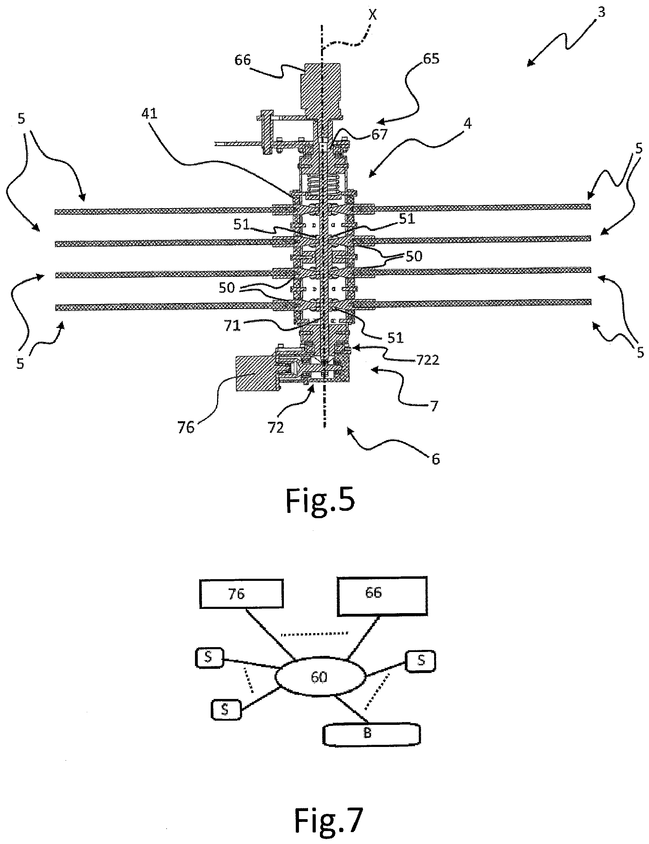

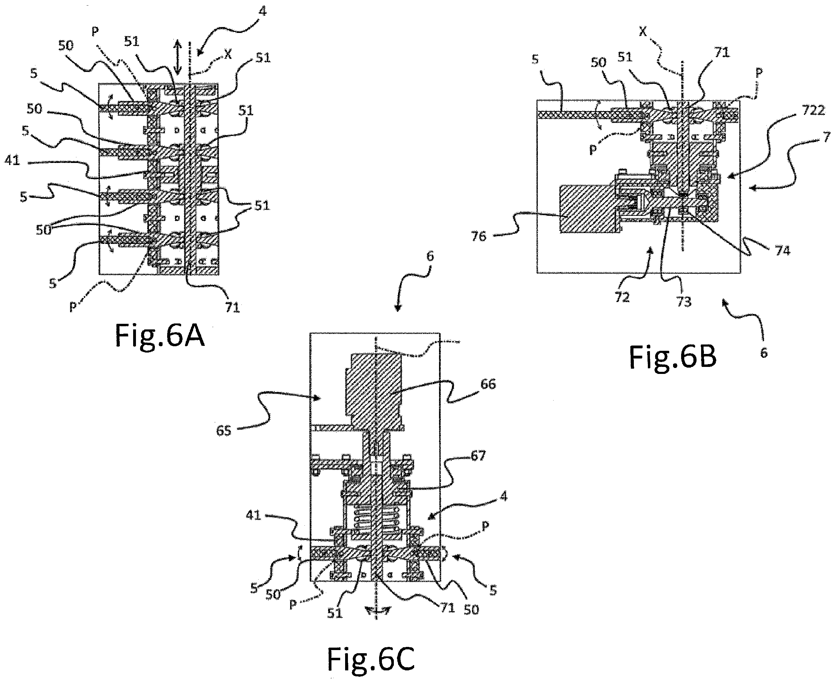

- Figures 6A, 6B and 6C show several details of the thinner device according to the present invention as shown in Figure 5; in particular, Figure 6A shows one possible embodiment of the shaft of the second mechanism, to which the mobile elements for moving the remover elements of the thinner device according to the present invention are connected; Figure 6B shows one possible embodiment of the second mechanism of the drive system of the thinner device according to the present invention; Figure 6C shows the first mechanism of the drive system of the thinner device according to the present invention;
- Figure 7 schematically shows the electric and electronic connection of the control unit of the thinner device according to the present invention.

With reference to the above-mentioned figures, reference numeral 3 designates as a whole the thinner device.

Reference numeral 1 designates an agricultural machine as a whole, or at least a portion thereof, which may comprise a thinner device 3 according to the present invention.

The thinner device 3 according to the present invention is particularly suitable for thinning out vegetative elements protruding from branches of vegetable plants, e.g. trees; in particular, vegetative elements that are present on fruit trees.

For the purposes of the present description, the generic term "vegetative elements" refers to buds, flowers and/or fruits, in particular unripe fruits, that protrude from the branches of a vegetable plant, which may be, for example, a tree, in particular a fruit tree.

The thinner device 3 according to the present invention comprises a body 4, which extends substantially along a longitudinal axis "X". Said body 4 in turn comprises an external structure 41.

The thinner device 3 according to the present invention comprises a plurality of remover elements 5. Said remover elements 5 are adapted to act upon the vegetative elements in order to thin out such vegetative elements protruding from the branches of vegetable plants. Therefore, the action of said remover elements 5 allows obtaining the effect of thinning out the vegetative elements that are present on branches of plants.

Said remover elements 5 project from said body 4, in particular from the external structure 41 of said body 4, more preferably at least along a direction perpendicular to said longitudinal axis "X". Preferably, each remover element 5 extends along a direction perpendicular to said longitudinal axis "X".

The thinner device 3 according to the present invention comprises a drive system 6.

Said drive device 6 comprises, in turn, at least one first mechanism 65. Said at least one first mechanism 65 is adapted to at least cause at least said body 4 and said remover elements 5 to rotate in a controlled manner relative to said longitudinal axis "X". Preferably, said body 4 and said remover elements 5 rotate at the same speed, e.g. they rotate integrally with each other.

In addition, said drive system 6 comprises at least one second mechanism 7. Said second mechanism 7 is adapted to move said remover elements 5; in particular, said second mechanism 7 is adapted to move the remover elements 5 relative to said external structure 41 of the body 4.

The thinner device 3 according to the present invention is therefore capable of moving said remover elements 5 by causing them to rotate about the longitudinal axis "X" of the thinner device 3, and also by moving them relative to the external structure 41 of the body 4, which rotates together with said remover elements 5. This dual movement of the remover elements 5 facilitates the task of thinning out the vegetative elements that are present on branches of vegetable plants without however damaging the vegetable plant; as known in the art, possible damages that might be caused by said remover elements 5 are, for example, damages to the branches of the vegetable plant, or complete removal of all vegetative elements from the branches of the vegetable plant.

In a preferred, but non-limiting, embodiment, each remover element 5 comprises a connection portion 50. Said connection portion 50 is pivoted to the external structure 41.

Said connection portion 50 of the remover element 5 is pivoted to the external structure 41 in a manner such that said remover element 5 will oscillate about a pivot axis "P", in particular the longitudinal axis.

In a preferred, but non-limiting embodiment, each pivot "P" extends along an axis perpendicular to both said longitudinal axis "X" and the longitudinal extension of the corresponding remover element 5.

In general, the present solution ensures, through said drive system 6, both an oscillatory movement of the remover elements 5 relative to the external structure 41 of the body 4, about the pivot axis "P", and a rotary movement of the remover elements 5 about said longitudinal axis "X".

In a preferred embodiment, the size and conformation of each removal element 5 are independent of the type of vegetative element to be thinned out and/or the plant type, since the same remover elements 5 can be used for thinning out different types of vegetative elements and/or on different types of vegetable plants.

In one possible alternative solution, the material, longitudinal extension and diameter of each remover element 5 are predefined as a function of the type of vegetative element to be thinned out and/or the type of vegetable plant whereon it is to be used.

Preferably, said connection portion 50 is arranged at a first end of the longitudinal extension of the remover element 5. The remaining part of the remover element 5, in particular the part protruding past the external structure 41 of the body 4, is adapted to act upon the vegetative elements in order to thin them out on the branches of the vegetable plant.

In a preferred, but non-limiting, embodiment, each remover element 5 extends along a direction perpendicular to said longitudinal axis "X". In an alternative embodiment, each remover element 5 extends along a direction inclined relative to the line perpendicular to said longitudinal axis "X". In this latter embodiment, the remover elements extend tilted at a desired angle of inclination.

Preferably, said remover elements 5 have a longitudinal conformation, e.g. a rod-like shape, and said remover elements 5 are arranged appropriately spaced apart on said body 4.

Said remover elements 5 are made of plastic materials. The radial dimensions of each remover element 5 depend on the plastic material employed. Moreover, the radial dimensions of each remover element 5 may depend on the thinning action to be obtained.

In general, said remover elements 5 are so designed that the oscillating motion imparted on each remover element 5 through said second mechanism 7 will cause the very structure of the remover element 5 to oscillate.

The present solution allows the remover element 5 to bend, so that it will cause no damage to either its own structure or the vegetable plant, should the remover element 5 come to abut against the branches of the vegetable plant.

In alternative embodiments (not shown), each remover element 5 has a branched conformation, since it comprises one or more branches to increase the surface of the remover element 5 capable of acting upon the vegetative elements to be thinned out. In a further exemplary, but non-limiting, embodiment, from said connection portion 50 of the remover element a plurality of elongate elements extend, which look like bristles and form one remover element.

In general, said remover elements 5 may have a constant or variable section, e.g. the remover element 5 becomes smaller at its distal end, compared to the end thereof proximal to the body 4.

In a preferred, but non-limiting, embodiment, said remover elements 5 are preferably arranged in rows, more preferably in columns. Preferably, said rows of remover elements 5 extend along directions parallel to said longitudinal axis "X", and are suitably angularly spaced apart, protruding from the external structure 41 of the body 4.

By way of non-limiting example, each row may comprise a number of remover elements 5 in the range of 2 to 20, e.g. 3 to 15, preferably 4 or 14.

Moreover, each thinner device 3 comprises a number of rows in the range of 2 to 18, angularly equidistant from each other, e.g. 4 to 8, preferably 6 rows.

Due to the possibility of moving the remover elements 5 with both a rotary and an oscillatory motion by means of said drive system 6, the present solution makes it possible to reduce the total number of remover elements 5 capable of acting upon the vegetative elements on the vegetable plant.

In addition, through the drive system 6 it is possible to control and adapt the motion of the remover elements 5 as required.

In one possible exemplary, but non-limiting, embodiment of the thinner device 3 according to the present invention, said at least one second mechanism 7 comprises a shaft 71. Said shaft 71 extends along said longitudinal axis "X" of the thinner device 3.

Said shaft 71 is preferably coaxial to said external structure 41 of the body 4.

On said shaft 71, said remover elements 5 are connected. Said remover elements 5 are connected to said shaft 71 by means of mobile elements 51.

Preferably, said mobile elements 51 are designed in such a way that said remover elements 5 can extend substantially perpendicularly from said shaft 71.

Said at least one second mechanism 7 also comprises a kinematic mechanism 72. Said kinematic mechanism 72 can change the position of said remover elements 5, in particular by moving said remover elements 5. In particular, said kinematic mechanism 72 is adapted to change the position of said remover elements 5 relative to said external structure 41 of the body 4.

Preferably, each remover element 5 oscillates relative to a respective axis perpendicular to said longitudinal axis "X", e.g. said kinematic mechanism 72 allows the remover element 5 to rotate, in particular to oscillate, relative to the pivot axis "P" through which it is pivoted to the external structure 41 of the body 4, in particular at said connection portion 50.

In an alternative embodiment, said pivot "P" is positioned along an axis parallel to said longitudinal axis "X", so that said remover elements 5 will oscillate relative to an axis parallel to said longitudinal axis "X".

In general, said mobile elements 51 are adapted to allow said remover elements 5 to move relative to said external structure 41 of the body 4. In particular, said mobile elements 51, connected to the shaft 71, allow said kinematic mechanism 72 to change the position of said remover elements 5 relative to said external structure 41 of the body 4.

In a preferred embodiment, said mobile elements 51 are at least partly comprised in the connection portion 50 of the remover elements 5, more preferably at the first ends of the longitudinal extension of the remover elements 5, past the point where the same connection portion 50 is pivoted to the external structure 41 of the body 4, as clearly visible in the annexed drawings.

In an even more preferable embodiment, said mobile element 51, said connection portion 50 and the very remover element 5, to which they belong, are made as one piece of plastic material, e.g. by means of a moulding process. Such an embodiment allows reducing the production costs of the device according to the present invention.

In a preferred, but non-limiting, embodiment of the thinner device 3 according to the present invention, said kinematic mechanism 72 is adapted to move said shaft 71 with a reciprocating motion. In particular, said kinematic mechanism 72 is adapted to move said shaft 71 with a reciprocating motion along said longitudinal axis "X".

In this embodiment, said mobile elements 51 are connected with at least one degree of freedom, e.g. obtained by means of a ball joint, to the shaft 71, so that the motion of the shaft 71 will be suitably transferred to the mobile element 51 and hence to the remover element 5, which, due to the constraint provided by the pivot "P" to the connection portion 50 of the same remover element 5, will be able to oscillate relative to the axis of the pivot "P". Said pivot "P" is perpendicular to said longitudinal axis "X".

In an alternative exemplary embodiment of the thinner device 3, said kinematic mechanism 72 is adapted to move said mobile elements 51 with a reciprocating motion. In particular, said kinematic mechanism 72 is adapted to move said mobile elements 51 with a reciprocating motion relative to said shaft 71, in particular said mobile elements 51 sliding along said shaft 71.

In this embodiment, said mobile elements 51 are slides capable of sliding along said shaft 71, which acts as a guide for said mobile elements 51. In this embodiment, there is preferably one mobile element 51 for each row of remover elements 5, in particular one per row extending parallel to said longitudinal axis "X". In this embodiment, said remover elements 5, and in particular the respective connection portions 50, are hinged to the mobile element 51.

In a preferred, but non-limiting, embodiment, said second mechanism 7 comprises a motor 76. Said motor 76 is preferably a hydraulic or electric motor, e.g. a brushless motor.

Said motor 76 is at least adapted to drive said kinematic mechanism 72.

In one possible embodiment of the thinner device 3 according to the present invention, said first mechanism 65 comprises a motor 66 and a junction portion 67.

Said motor 66 is preferably a hydraulic or electric motor, e.g. a brushless motor.

Said junction portion 67 is connected to said body 4 and also, in a suitable manner, to said at least one second mechanism 7, so as to cause said remover elements 5 to rotate about said longitudinal axis "X". In particular, the connection of said junction portion 67 to said at least one second mechanism 7 is such as to allow for simultaneous oscillation of the remover elements 5 during the rotation of the remover elements 5 about the longitudinal axis "X", imparted by said first mechanism 65. For example, said junction portion 67 comprises a hole through which said shaft 71 can slide as it reciprocates.

In one possible exemplary, but non-limiting, embodiment said kinematic mechanism 72 of the second mechanism 7 comprises at least one first portion 722. Said first portion 722 is adapted to at least partly decouple the kinematic mechanism 72, thus keeping its position relative to said longitudinal axis "X" unchanged during the rotation imparted to the remover elements 5, and in particular to the body 4, by the first mechanism 65, thereby allowing the kinematic mechanism 72 to not rotate about said longitudinal axis "X".

In one possible exemplary, but non-limiting, embodiment, it is possible, through suitable transmission members, to use a single hydraulic or electric motor capable of driving both said first mechanism 65 and said second mechanism 7.

In general, said drive system 6 preferably comprises a control unit 60. Said control unit 60 is adapted to appropriately control the motors (66, 76) comprised in the thinner device 3.

In particular, said control unit 60 can, according to specific requirements, change the revolution speed about said longitudinal axis "X" and/or the oscillation speed of the remover elements 5, e.g. relative to said pivot "P". In this way, it is possible to adapt the revolution and oscillation speeds of the remover elements 5 as a function of the surrounding conditions, for a constant thinning effect on the vegetable plants. For example, it is possible to adjust the revolution speed as a function of the speed of movement, e.g. in an inversely proportional manner, in order to be sure that a homogeneous thinning effect will be obtained. Besides, the revolution and oscillation speeds of the remover elements 5 may be changed as a function of the type of vegetable plant and/or vegetative element to be thinned out.

By way of example, said control unit 60 may receive signals and/or data from a plurality of sensors "S", useful to determine the surrounding conditions, such as, for example, the speed of movement or the performance of the thinner device 3, and/or from a control keyboard "B", which may be used in order to enter data about the type of vegetable plant and/or vegetative element to be thinned out. The data entered by means of the control keyboard "B" may be saved, e.g. to a non-volatile memory medium, for future use of the same operating parameters.

Describing more in detail the construction of a possible second mechanism 7 comprised in the drive system 6 of the thinner device 3 according to the present invention, said kinematic mechanism 72 comprises a spindle 73. On said spindle 73, at least one eccentric element 74 is fixed, e.g. keyed. Said eccentric element 74 is adapted to move said remover elements 5. In a preferred embodiment, said eccentric element 74 is adapted to move said shaft 71 along said longitudinal axis "X", on which shaft said remover elements 5 are fixed by means of spherical elements 51.

A rotary motion is imparted to one end of said spindle 73, e.g. by means of said motor 76 comprised in the second mechanism 7, or by means of the motor 66 comprised in the first mechanism 65, which motion is transmitted through suitable transmission elements.

One possible exemplary, but non-limiting, embodiment comprises more than one eccentric element 74 and more than one mobile element 51. In this embodiment, each eccentric element 74 is adapted to move along said longitudinal axis "X" at least one mobile element 51, whereon a plurality of remover elements 5 are suitably fixed, e.g. a row of remover elements extending parallel to said longitudinal axis "X", preferably hinged, e.g. through said connection portions 50, to the mobile element 51. In this embodiment, each mobile element 51 is adapted to slide along said shaft 71 through respective guides. In the present embodiment, said shaft 71 maintains its position along said longitudinal axis "X", since it does not slide along it.

In a preferred, but non-limiting, embodiment, said first mechanism 65 is arranged in proximity to one end of the body 4 along said longitudinal axis "X"; whereas said second mechanism 7 is arranged in proximity to the other end of the body 4 along said longitudinal axis "X".

Preferably, the thinner device 3 according to the present invention is designed in such a way that said at least one first mechanism 65 and said at least one second mechanism 7 are so designed that the period of rotation of said remover elements 5 relative to said longitudinal axis "X" is greater than the period of an oscillation of the same remover elements 5 relative to said external structure 41 of the body 4, e.g. the oscillation relative to the axis of the pivot "P". In fact, the frequency of oscillation of the same remover elements 5 relative to said external structure 41 of the body 4 is preferably greater than the frequency of rotation of said remover elements 5 relative to said longitudinal axis "X". By way of example, the ratio between the two revolution periods is comprised between 1/2 and 1/50, being preferably 1/10, e.g. one revolution about the axis "X" corresponds to ten oscillations relative to the axis of the pivot "P".

In one possible exemplary, but non-limiting, embodiment, said at least one second mechanism 7, and in particular said kinematic mechanism 72, is so designed that said remover elements 5 will move synchronously and concurrently each other.

In one possible embodiment, said at least one second mechanism 7, and in particular said kinematic mechanism 72, is so designed that all the remover elements 5, which are arranged along an axis parallel to said longitudinal axis "X", arranged in a row, will move synchronously and concurrently each other.

In one possible embodiment, said at least one second mechanism 7, and in particular said kinematic mechanism 72, is so designed that at least two rows of remover elements 5 will move asynchronously and/or discordantly each other.

In a further exemplary embodiment, said at least one second mechanism 7, and in particular said kinematic mechanism 72, is so designed that said remover elements 5 will move discordantly and/or asynchronously each other.

Said control unit 60 can control said first mechanism 65 and said second mechanism 7, so as to control the speed ratio and/or the possible synchronism and concordance of the movements of the remover elements 5 as necessary.

The thinner device 3 according to the present invention is particularly suitable for application on an agricultural machine 1 for working on branches of vegetable plants. In particular, the thinner device 3 is applicable to self-moving or tractor-towed agricultural machines 1 for working on branches of trees, in particular fruit trees.

The agricultural machine 1 according to the present invention is adapted to carry out operations on branches of trees, in particular fruit trees.

The agricultural machine 1 comprises a main frame 12 and a support frame 14.

Said main frame 12 is susceptible of being connected to a vehicle, in particular an agricultural tractor.

In a preferred embodiment (not shown), said main frame 12 comprises a moving structure. Said moving structure makes it possible, through a suitable drive system, to raise, move laterally and tilt in one or more directions at least a part of the agricultural machine, particularly the support frame 14, for the purpose of adapting the agricultural machine 1 to the characteristics of the vegetable plants. Preferably, said moving structure is interposed between that portion of the main frame 12, which is adapted to be connected to a vehicle, and that portion of the main frame to which the support frame 14 is connected.

Said support frame 14 is configured to support at least one thinner device 3 according to the present invention. Said support frame 14 is configured to reduce the propagation of any vibrations generated by the thinner device 3 towards the main frame 12. Said support frame 14 is adapted to be connected to both ends of the body 4 of the thinner device 3.

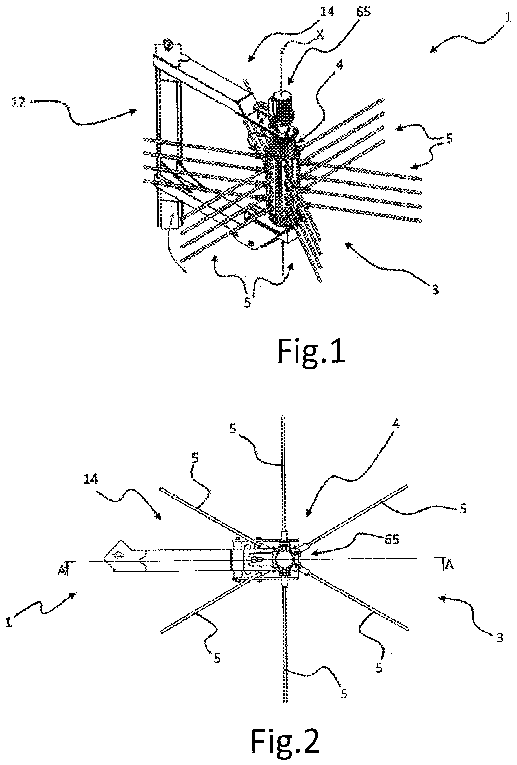

Figure 1 shows an axonometric view of one possible embodiment of at least a portion of an agricultural machine 1 comprising the thinner device 3 according to the present invention.

In the exemplary, but non-limiting, embodiment illustrated herein, one can see six rows of remover elements 5 parallel to the longitudinal axis "X", suitably connected to the body 4.

The thinner device 3 is fixed to the support frame 14, which is in turn fixed to a portion of the main frame 12. The assembly consisting of the support frame 14 and the portion of main frame 12 forms a C-shaped structure adapted to be fixed to the ends of the body 4 of the thinner device 3. Such a conformation allows reducing the generation and propagation of undesired oscillations of the thinner device 3 and/or of the agricultural machine 1.

In Figure 1 it is possible to see one possible embodiment of the first mechanism 65 of the drive system 6.

Figure 2 shows a top view of the portion of agricultural machine 1 with the thinner device 3 of Figure 1. From this figure one can infer the possible relative arrangements of the rows of remover elements 5.

In the illustrated embodiment, said rows of remover elements 5 are arranged angularly equidistant along the perimeter of the body 4, e.g. spaced apart by approx. 60°.

In Figure 2 one can also see one possible longitudinal conformation of the remover elements 5 protruding from the body 4.

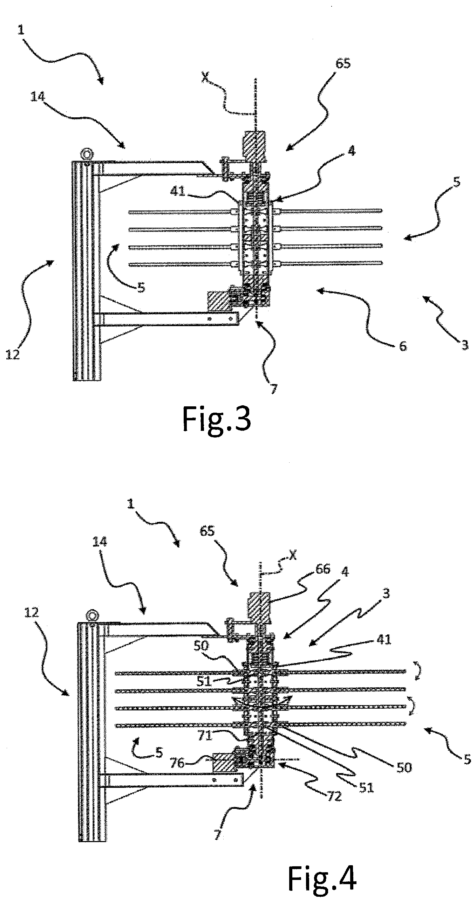

Figure 3 shows the agricultural machine 1 with the thinner device 3 of Figure 1 in a sectional view relative to a vertical plane A-A, as shown in Figure 2.

The present figure shows an embodiment of the thinner device 3, wherein each row of remover elements 5 comprises four remover elements 5. From the present figure, it is possible to infer one possible embodiment of the body 4 having an external structure 41.

This figure also shows one possible arrangement of the first mechanism 65 and second mechanism 7 of the drive system 6.

In the same Figure 3 it is also visible one possible conformation of the portion of main frame 12 and of the support frame 14.

Figure 4 shows a sectional view of the agricultural machine 1 comprising the thinner device 3, wherein the thinner device 3 is rotated compared to the device shown in Figure 3, so as to show the sections of said remover elements 5.

From this figure, one can infer one possible embodiment of the remover elements 5, wherein the latter have a constant cross-section.

The figure also shows the shaft 71 whereon the mobile elements 51 are connected, which in the present embodiment consist of ball joints.

In the embodiment shown in Figure 4, to each mobile element 51 only one connection portion 50 is connected, and, more preferably, from each connection portion only one remover element 5 extends.

From this figure, it is possible to infer one possible embodiment of the first mechanism 65 comprising a motor 66 arranged in alignment with said longitudinal axis "X".

In the illustrated embodiment, one can see one possible embodiment of the second mechanism 7, which comprises a kinematic mechanism 72 and a motor 76 arranged along an axis perpendicular to said longitudinal axis "X".

From this figure one can understand the rotary motion of the body 4 and remover elements 5 about the axis "X", in addition to the oscillatory motion of the remover elements 5 relative to an axis perpendicular to said longitudinal axis "X", e.g. relative to the axes of the pivots "P" through which the remover elements 5 are pivoted to the external structure 41 of the body 4.

From the present figure it is also possible to infer one possible proportion among the dimensions of the different parts of the thinner device 3. For example, one can see that the length of a remover element 5 is comparable to the length of the body 4.

Furthermore, in this figure one can determine the relative positions of the first mechanism 65 and second mechanism 7 of the drive system 6.

Figure 5 shows the thinner device 3 alone in a sectional view. From this figure it is possible to infer further technical implementation details of a preferred, but non-limiting, embodiment of the thinner device 3 according to the present invention. For example, in Figure 5 one can see the junction portion 67 that permits the transmission of the rotary motion of the motor 66 to the body 4 and to the remover elements 5 in order to allow them to rotate about the longitudinal axis "X".

In order to provide even further details, Figure 6A shows one possible embodiment of the shaft 71 of the second mechanism 7 and of the mobile elements 51 for moving the remover elements 5 of the thinner device 3 according to the present invention.

From this figure one can infer one possible embodiment of the connection portion 50 comprising mobile elements 51. In Figure 6A one can see the pivot "P" through which the connection portion 50 of the remover elements 5 is pivoted to the external structure 41 of the body 4. The drawing shows the shaft 71, which can slide along said longitudinal axis "X", said shaft 71 thus moving the mobile elements 51. In this manner, the remover elements 5 are moved and, due to the constraint defined by the pivot "P", the remover elements 5 oscillate relative to the pivot "P", which is perpendicular to the longitudinal axis "X". In the illustrated embodiment, the remover elements 5 oscillate in planes defined by said longitudinal axis "X".

Figure 6B shows one possible embodiment of the second mechanism 7 of the drive system 6 of the thinner device 3 according to the present invention.

In the illustrated embodiment, a motor 76 is visible, to which a kinematic mechanism 72 is connected which comprises a spindle 73. On said spindle 73 an eccentric element 74 is connected, which is adapted to operate in the shaft 71, causing it to slide with a reciprocating motion along said longitudinal axis "X".

In one possible alternative embodiment, said spindle 73 and said eccentric element 74 are made as one piece, which is suitably interfaced with said shaft 71.

Figure 6C shows the first mechanism 65 of the drive system 6 of the thinner device 3 according to the present invention. This embodiment comprises a motor 66, which is connected to the body 4 through a junction portion 67, which is so shaped as to cause the body 4 and the remover elements 5 to rotate.

Said junction portion 67 comprises a recess that permits the reciprocating motion of the shaft 71 along said longitudinal axis "X" during the rotation about the same longitudinal axis "X".

In this figure one can see a damper element, which can reduce the vibrations along the longitudinal axis "X", e.g. generated by the second mechanism 7.

The figure also shows two remover elements 5 suitably pivoted to the external structure 41 at the connection portion 50, being connected to the shaft 71 through said mobile elements 51.

Figure 7 schematically shows one possible electric and electronic connection of the control unit 60 of the drive system 6 of the thinner device 3 according to the present invention. In this figure it is visible how the motors (66, 76) comprised in the various mechanisms (65, 7) are electrically and electronically connected to the control unit 60, which can control said hydraulic or electric motors (66, 76) as required.

Moreover, said control unit 60 can advantageously be connected to a plurality of sensors "S", which allow determining the best operability conditions of the thinner device 3, e.g. in order to determine the optimal revolution speed of each motor (66, 76) comprised in the drive system 6. Said sensors "S" may be adapted to determine the surrounding conditions in which the thinner device 3 is operating, e.g. the speed of movement along a row of trees, or the operating conditions of the thinner device 3 itself.

The control unit 60 can advantageously be connected to a control keyboard "B", through which an operator can set up the desired operating configuration of the thinner device 3.

The thinner device 3 according to the present invention permits obtaining a vegetative-element thinning rate in the range of 10% to 50%, preferably 20% to 40%.

The drive system 6 of the thinner device 3 makes it possible to control and change the vegetative-element thinning rate. In fact, said drive system 6 is able to change the speed of movement of the remover elements 5, and hence the action exerted by the same remover elements 5 on the vegetative elements.

The thinner device 3 according to the present invention allows making the speed of movement of the thinner device 3 itself, e.g. along a row of trees, independent of the thinning action to be exerted on the vegetable plant, since it is possible to set the desired thinning action independently of the speed of movement of the thinner device 3.

Moreover, the thinner device 3 can be appropriately programmed to always exert the same thinning action, compensating for possible variations in the surrounding conditions, e.g. variations in the speed of movement of the same thinner device 3.

The thinner device 3 is capable of exerting the same thinning action on all the vegetable plants comprised in a row, regardless of their position in the row itself.

The thinner device 3 according to the present invention allows working on different vegetative elements and/or different vegetable plants while keeping the remover elements 5 unchanged, because the action exerted by the latter on the vegetative elements can be adjusted by means of said drive system 6.

The thinner device 3 according to the present invention makes it possible to impart an oscillatory motion to the remover elements 5 alone, thus reducing the risk of propagation of vibratory motions that might cause the structure of the thinner device 3 to resonate.

Any embodiments which have not been described herein, but which can be easily inferred by a person skilled in the art in the light of the present description and of the annexed drawings, should be considered to fall within the protection scope of the present invention.

**REFERENCE NUMERALS**

| | |
|---|---|
| Agricultural machine | 1 |
| Main frame | 12 |
| Support frame | 14 |
| Thinner device | 3 |
| Body | 4 |
| External structure | 41 |
| Remover elements | 5 |
| Connection portion | 50 |
| Mobile elements | 51 |
| Drive system | 6 |
| Control unit | 60 |
| First mechanism | 65 |
| Motor | 66 |
| Junction portion | 67 |
| Second mechanism | 7 |
| Shaft | 71 |
| Kinematic mechanism | 72 |
| First portion | 722 |
| Spindle | 73 |
| Eccentric element | 74 |
| Motor | 76 |
| Sensors | "S" |
| Control keyboard | "B" |
| Longitudinal axis | "X" |
| Pivot | "P" |

## Claims

1. Thinner device (3) for thinning out vegetative elements protruding from branches of vegetable plants, in particular fruit trees;
said thinner device (3) comprising:
- a body (4), extending substantially along a longitudinal axis (X), comprising an external structure (41);
- a plurality of remover elements (5), adapted to act upon vegetative elements for thinning them out; said remover elements (5) projecting from said body (4);
said thinner device (3) being **characterized in that** it comprises a drive system (6), which in turn comprises:
- at least one first mechanism (65) adapted to cause at least said body (4) and said remover elements (5) to rotate in a controlled manner relative to said longitudinal axis (X) ;
- at least one second mechanism (7) adapted to move said remover elements (5) relative to said external structure (41) of the body (4).

2. Device according to claim 1, wherein each remover element (5) comprises a connection portion (50);
said connection portion (50) being pivoted to the external structure (41) in a manner such that said remover element (5) will oscillate about a pivot axis (P).

3. Device according to one of the preceding claims, wherein said at least one second mechanism (7) comprises:
- a shaft (71) extending along said longitudinal axis (X), being coaxial to said external structure (41) of the body (4); said remover elements (5) being connected to said shaft (71) through mobile elements (51);
- a kinematic mechanism (72) capable of moving said remover elements (5), changing their position relative to said external structure (41) of the body (4).

4. Device according to one of the preceding claims, wherein each remover element (5) oscillates relative to a respective axis perpendicular to said longitudinal axis (X) .

5. Device according to claim 3, wherein said kinematic mechanism (72) is adapted to move said shaft (71) with a reciprocating motion along said longitudinal axis (X).

6. Device according to claim 3, wherein said kinematic mechanism (72) is adapted to move said mobile elements (51) with a reciprocating motion relative to said shaft (71); said mobile elements (51) sliding along said shaft (71).

7. Device according to one of the preceding claims, wherein said first mechanism (65) comprises a motor (66) and a junction portion (67);
said junction portion (67) being connected to said body (4) and, in a suitable manner, to said at least one second mechanism (7), so as to cause said remover elements (5) to rotate about said longitudinal axis (X).

8. Device according to claims 3 and 7, wherein said kinematic mechanism (72) comprises at least one first portion (722) adapted to at least partly decouple the kinematic mechanism (72), thus keeping its position relative to said longitudinal axis (X) unchanged during the rotation imparted to the remover elements (5) by the first mechanism (65).

9. Device according to claim 3, 7 or 8, wherein said kinematic mechanism (72) comprises a spindle (73) and at least one eccentric element (74) adapted to move said remover elements (5).

10. Device according to claim 9, wherein said eccentric element (74) is adapted to move said shaft (71), whereon said remover elements (5) are fixed by means of spherical elements (51), along said longitudinal axis (X).

11. Device according to claim 9, wherein each eccentric element (74) is adapted to move at least one mobile element (51), whereon a plurality of remover elements (5) are suitably fixed, along said longitudinal axis (X);
said at least one mobile element (51) being adapted to slide along said shaft (71) via respective guides.

12. Device according to one of the preceding claims, wherein said at least one first mechanism (65) and said at least one second mechanism (7) are so designed that the period of rotation of said remover elements (5) relative to said longitudinal axis (X) is greater than the period of an oscillation of the same remover elements (5) relative to said external structure (41) of the body (4).

13. Device according to one of the preceding claims, wherein said remover elements (5) have a longitudinal conformation and are arranged appropriately spaced apart on said body (4); said at least one second mechanism (7) being so designed that said remover elements (5) will move synchronously and concurrently.

14. Device according to one of claims 1 to 12, wherein said remover elements (5) have a longitudinal conformation and are arranged appropriately spaced apart on said body (4); said at least one second mechanism (7) being so designed that said remover elements (5) will move discordantly and/or asynchronously.

15. Agricultural machine (1) for working on branches of vegetable plants, in particular fruit trees;
said agricultural machine (1) comprising:
- a main frame (12), which is susceptible of being connected to a vehicle, in particular an agricultural tractor;
- a support frame (14);
said support frame (14) being configured for supporting a thinner device (3) according to one of the preceding claims.
